Europäisches Patentamt

European Patent Office

Office européen des brevets

(11) Veröffentlichungsnummer: **0 317 823**
**A2**

# EUROPÄISCHE PATENTANMELDUNG

(21) Anmeldenummer: 88118612.6

(51) Int. Cl.4: **F16K 31/06**

(22) Anmeldetag: 09.11.88

(30) Priorität: 21.11.87 DE 3739494

(43) Veröffentlichungstag der Anmeldung:
31.05.89 Patentblatt 89/22

(84) Benannte Vertragsstaaten:
DE ES FR GB IT SE

(71) Anmelder: **Süddeutsche Kühlerfabrik Julius Fr. Behr GmbH & Co. KG**
**Mauserstrasse 3**
**D-7000 Stuttgart 30(DE)**

(72) Erfinder: **Helms, Werner, Dipl.-Ing. (FH)**
**Rotenstrasse 22**
**D-7300 Esslingen (Zell)(DE)**
Erfinder: **Bauer, Dieter, Dipl.-Ing.**
**Kapfenburgstrasse 43**
**D-7000 Stuttgart 30(DE)**

(74) Vertreter: **Dreiss, Hosenthien & Fuhlendorf**
**Gerokstrasse 6**
**D-7000 Stuttgart 1(DE)**

(54) **Ventil zur Steuerung Kühlwasserumlaufs bei Brennkraftmaschinen.**

(57) Bei einem Ventil zur Steuerung des Kühlwasserumlaufs bei Brennkraftmaschinen mit einem Ventilkörper (9), der mit einem Ventilsitz (8) zusammenwirkt, wobei der Ventilkörper (9) und der Ventilsitz (8) durch einen Elektromagneten (Spule 4) gegen die Wirkung einer Feder (17) relativ zueinander bewegbar sind und bei dem der Kühlwasserzufluß (19), der Kühlwasserdurchlauf (20) im Ventilsitz (8) und um den Ventilkörper (9) und der Kühlwasserablauf (21) etwa rotationssymmetrisch zu einer Mittelachse (1) ausgebildet sind, wird zur Herabsetzung des Durchflußwiderstands vorgeschlagen, daß der Ventilkörper (9) stromlinienförmig, tropfenförmig ausgebildet ist, wobei der dickere Kopfteil (9´) mit dem Ventilsitz (8) zusammenwirkt.

FIG. 1

EP 0 317 823 A2

## Ventil zur Steuerung des Kühlwasserumlaufs bei Brennkraftmaschinen

Die Erfindung betrifft ein Ventil zur Steuerung des Kühlwasserumlaufs bei Brennkraftmaschinen mit einem stromlinienförmigen Ventilkörper, dessen dicker Kopfteil mit einem Ventilsitz zusammenwirkt und dessen an den Kopfteil angepaßter Endteil kreiskegelförmig ist, bei dem der Ventilkörper und der Ventilsitz durch einen Elektromagneten (Spule 4) relativ zueinander bewegbar sind und der Kühlwasserzufluß, der Kühlwasserdurchlauf im Ventilsitz und um den Ventilkörper und der Kühlwasserablauf etwa rotationssymmetrisch zu einer Mittelachse ausgebildet sind.

Ein solches aus der DE-OS 36 10 122 bekanntes Ventil ist nur teilweise stromlinienförmig, so daß durch die Formgebung des Ventilkörpers ein relativ hoher Durchflußwiderstand verursacht wird. Eine abgestufte magnetgesteuerte Teilöffnung des Ventils ist nicht möglich, da der Ventilkörper nur zwischen zwei Endstellungen, einmal durch den Strömungswiderstand und zum anderen durch die Wirkung des Elektromagneten bewegbar ist.

Aufgabe der vorliegenden Erfindung ist es, das eingangs angeführte Ventil strömungsgünstiger zu gestalten.

Zur Lösung dieser Aufgabe sieht die Erfindung vor, daß der stromlinienförmige Ventilkörper tropfenförmig ausgebildet ist und der Kopfteil die Form einer Halbkugel hat.

Durch die Stromlinienform und insbesondere durch die Halbkugelform des Kopfteils des Ventilkörpers wird der Durchströmungswiderstand wesentlich herabgesetzt, so daß ggf. der Durchflußquerschnitt und damit auch das Konstruktionsgewicht verringert werden kann. Durch die Anordnung einer Feder kann bei entsprechender Strombeaufschlagung des Elektromagneten eine Steuerung des Ventilkörpers in Zwischenlagen erfolgen, so daß damit eine optimale Steuerung des Kühlmittelumlaufs erreicht werden kann. Der Durchströmungswiderstand ist besonders gering, wenn der freie Durchflußquerschnitt bei ganz geöffnetem Ventil über die ganze Länge des Ventils etwa konstant ist. Es treten dann die geringsten Verwirbelungen auf, die Hauptursache des Durchflußwiderstandes sind.

Herstellungsmäßig besonders einfach und materialsparend kann der stromlinienförmige, tropfenförmige Ventilkörper mindestens zweiteilig ausgebildet aus dem halbkugelförmigen Kopfteil und dem kreiskegelförmigen Endteil bestehen, wobei diese Teile zur Bildung eines Rückschlagventils gegeneinander axial verschiebbar geführt sein können, wobei dann der Kopfteil durch eine schwache Feder gegen den Ventilsitz gedrückt ist und durch den Strömungsdruck bei teilweise oder ganz geöffnetem Ventil vom Ventilsitz abhebbar ist.

Montagemäßig und herstellungsmäßig besonders einfach kann der Ventilkörper konzentrisch in einem Haltering angeordnet und über am Umfang verteilte radiale Tragarme vom Haltering gehalten sein, wobei auch die radialen Haltearme einen stromlinienförmigen vorzugsweise tropfenförmigen Querschnitt aufweisen. Durch die Stromlinienform werden auch die Durchströmgeräusche minimiert.

Bei einem Ventil mit einer über den Elektromagneten verschiebbaren Rohrhülse, deren freies Ende den Ventilsitz bildet, kann zur Verringerung der Baugröße und Einsparung von Gewicht die Rohrhülse aus einem magnetisierbaren Werkstoff bestehen und als verschiebbarer Ankerteil mit der Magnetspule des Elektromagneten zusammenwirken und dabei mindestens teilweise in das Spuleninnere hineinragen. Weiter kann bei einem Ventil, bei dem die Spule des Elektromagneten von einem Magnetmantel umschlossen ist, der verschiebbare Ankerteil in einer Bohrung des Magnetmantels verschiebbar geführt sein. Weiter kann platz- und gewichtssparend der verschiebbare Ankerteil einen Bund aufweisen, der sich gegen die Feder abstützt, wobei zwischen dem Bund und einer Dichtfläche des Ventilgehäuses eine elastische Dichtung vorgesehen sein kann, die in geschlossenem Zustand des Ventils das Gehäuse mit seiner Dichtfläche gegen den Ankerteil abdichtet.

Eine rationelle Herstellung bei ggf. voll automatischer Montage kann dadurch erleichtert werden, daß der Haltering zwischen Flanschflächen zweier Gehäuseteile zentriert gehalten ist, wobei einer dieser Gehäuseteile den trichterförmigen Kühlwasserdurchlauf aufweist und der andere Gehäuseteil mit Abstand an die Form des Kopfteils des Ventilkörpers angepaßt ist. Der andere Gehäuseteil kann scheibenförmig ausgebildet im Kunststoffgehäuse zentriert aufgenommen sein.

Zur Erhöhung der Schließkraft des Elektromagneten kann zweckmäßigerweise der Magnetmantel einen Ringkonusteil aufweisen, der mit einer Konusfläche des verschiebbaren Ankerteils zusammenwirkt.

Zur Herabsetzung der Störungsanfälligkeit durch evtl. magnetisierbare Fremdkörper kann der Ankerteil aus einem nicht magnetisierbaren Rohrhülsenteil und einem magnetisierbaren in die Spule des Elektromagneten hineinragenden Restteil bestehen, wobei die Konusfläche durch ein Ende dieses Restteils gebildet sein kann.

Weitere erfindungsgemäße Ausbildungen sind den Unteransprüchen zu entnehmen und werden mit ihren Vorteilen anhand der beigefügten Zeichnungen in der nachstehenden Beschreibung näher erläutert. Es zeigen:

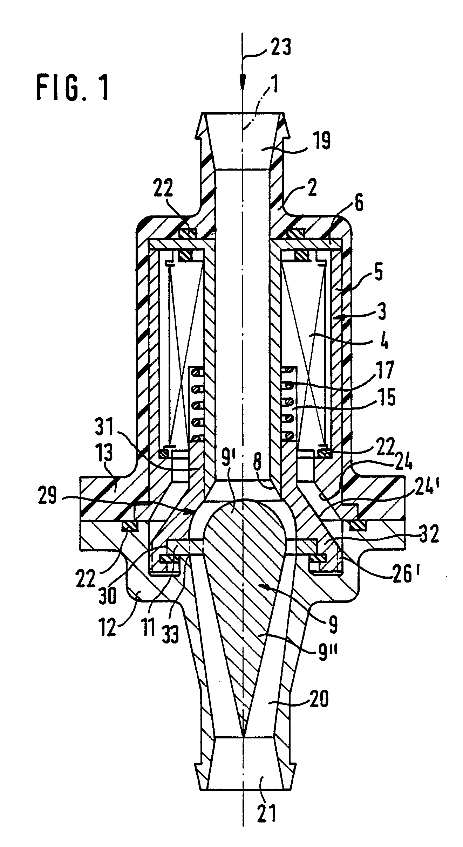

Figur 1 bis 5 Längsschnitte durch verschiedene Ausführungsformen von Ventilen.

Für entsprechende Teile werden bei den dargestellten und beschriebenen Ausführungsbeispielen die gleichen Bezugszeichen verwendet.

Bei dem in Figur 1 dargestellten Ausführungsbeispiel ist in einem symmetrisch zu einer Mittelachse 1 ausgebildeten Kunststoffgehäuse 2 in einem Magnetmantel 3 aus Eisen eine Spule 4 eines Elektromagneten eingeschlossen. Der Magnetmantel 3 selbst, besteht aus einem zylindrischen Rohrstück 5, an dessen einem Ende ein Abschlußkonus mit einer Konusfläche 24 angeordnet ist. Gegenüberliegend ist einstückig eine Abschlußscheibe 6 mit einer Rohrhülse 7, die durch das innere der Spule 4 geführt ist, angeordnet.

Ein konisch ausgebildetes Ende der Rohrhülse 7 gibt einen Ventilsitz 8 ab, der mit einem stromlinienförmigen, tropfenförmigen Ventilkörper 9 zusammenwirkt. Dieser selbst besteht aus einem halbkugelförmigen Kopfteil 9' und einem kreiskegelförmigen Endteil 9", die über am Umfang verteilte Tragarme 10 konzentrisch durch einen Haltering 11 gehalten sind.

Auf der Rohrhülse 7 ist in einer Ausnehmung 15 der Spule 4 ein glockenförmiger Leitteil 29 gegen eine Feder 17 veschiebbar geführt, der in einem Aufnahmeabsatz 30 den Haltering 11 mit dem Ventilkörper 9 trägt. Der Leitteil 29 weist neben seinem in der Ausnehmung geführten zylindrischen Teil 31 einen kreiskegelabschnittförmigen weiteren Teil 32 auf, dessen Konusfläche 24' mit der Konusfläche 24 des Magnetmantels 3 zusammenwirkt. Die Innenwand des glockenförmigen weiteren Teils 32 ist mit Abstand an die Kontur des Kopfteils 9 des Ventilsitzes 8 angepaßt und verlängert in der geöffneten Ventilstellung den Ventilsitz 8 kontinuierlich.

Durch die Feder 17 wird der Leitteil 29 mit dem Ventilkörper 9 im Kunststoffgehäuse 2 nach unten gedrückt, so daß der Haltering 11 an einer umlaufenden Anschlagfläche 33 des Gehäuseteils 12 anliegt, so daß im nicht erregten Zustand der Spule 4 ein Kühlwasserzufluß 19 über die Rohrhülse 7 über einen Kühlwasserdurchlauf 20 um den Ventilkörper 9 herum mit einem Kühlwasserablauf 21 verbunden ist. Die freien Durchflußquerschnitte sind bei geöffnetem Ventil über die gesamte Ventillänge in etwa die gleichen.

Der Magnetmantel 3 und die Spule 4 und die Gehäuseteile 12, 13 sind durch Dichtringe 22 abgedichtet, die in entsprechenden Ausnehmungen angeordnet sind. Durch Druckausgleichkanäle 26' ist der Leitteil 29 leicht verschiebbar.

Bei einer Strombeaufschlagung der Spule 4 wird durch die magnetischen Kräfte der Leitteil 29 gegen die Wirkung der Feder 17 nach oben gegen die Rohrhülse 7 verschoben, bis der Kopfteil 9' des Ventilkörpers 9 am Ventilsitz 8 der Rohrhülse 7 zur Anlage kommt und das Ventil geschlossen ist. Dabei liegen die Konusflächen 24, 24' zumindest beinahe aneinander an.

Das Gehäuse 2 mit den Gehäuseteilen 12 und 13 ist über nicht näher dargestellte Schrauben zusammengeschraubt.

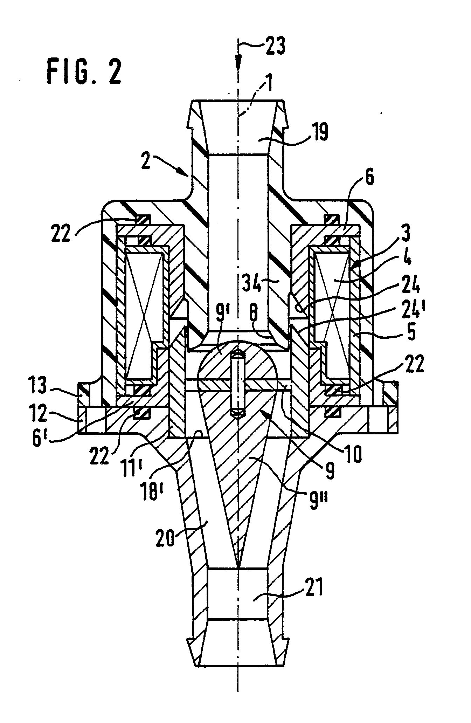

Beim in Figur 2 dargestellten Ausführungsbeispiel ist der Haltering als verschiebbares Rohrstück 11' ausgebildet und wirkt als verschiebbarer Ankerteil mit dem Magnetmantel 3 zusammen, wobei ein Ende als Konusfläche 24' an die Konusfläche 24 des Magnetmantels 3 angepasst ist. Das Rohrstück 11' ist in einer Bohrung 14 einer Abschlußscheibe 6' verschiebbar geführt. Durch den Strömungsdruck wird das Rohrstück 11' mit dem Ventilkörper 9 nach unten in den Kühlwasserdurchlauf 20 verschoben und liegt an der Anschlagfläche 18' an. Bei einer Strombeaufschlagung der Spule 4 wird gegen den Strömungsdruck dann das Rohrstück 11' nach oben verschoben, so daß der Kopfteil 9' am konischen Ventilsitz 8 anliegt und das Ventil so geschlossen ist. Der Ventilsitz 8 ist selbst am unteren Ende eines Rohrvorsprunges 34 des nach innen in den Magnetmantel 3 gezogenen Gehäuseteils 13 angeordnet und ist einstückig mit dem Kühlwasserzufluß 19 ausgebildet, so daß insgesamt nur wenige Einzelteile erforderlich sind, die leicht automatisch montiert werden können. Der Magnetmantel 3 selbst besteht aus den Abschlußscheiben 6, 6', dem zylindrischen Rohrstück 5 und dem nach innen gezogenen einstückig mit der Abschlußscheibe 6 ausgebildeten Rohrvorsprung 34, der an seinem unteren Ende die Konusfläche 24 aufweist. Die einzelnen Gehäuseteile 12, 12' und Teile des Magnetmantels 3 sind durch Dichtringe 22 abgedichtet.

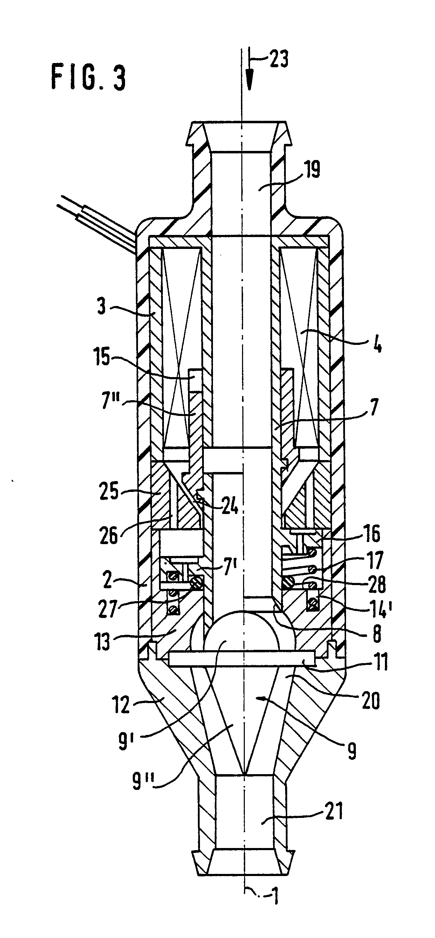

Beim in Figur 3 dargestellten Ausführungsbeispiel ist das Gehäuse 2 mit den Gehäuseteilen 12, 13 verklebt. Die Rohrhülse 7 besteht hier aus einem nicht magnetisierbaren Hülsenteil 7', der den Bund 16 trägt und einem magnetisierbaren Restteil 7", der in die Ausnehmung 15 der Spule 4 hineinragt und dessen freies Ende eine Konusfläche 24 aufweist, die mit einem Ringkonusteil 25 zusammenwirkt, der Teil des Magnetmantels 3 ist. In diesem Ringkonusteil 25 sind axiale Druckausgleichkanäle 26 vorgesehen, die eine Verschiebung des Bunds 16 erleichtern, der ebenfalls mit entsprechenden Kanälen versehen ist. Mit dem Bund 16 arbeitet noch ein Dichtring 27 zusammen, der auf dem Rohrhülsenteil 7' angeordnet ist und, wie in Figur 3 im linken Teil dargestellt, bei geschlossenem Ventil an einer Dichtfläche 28 des anderen Gehäuseteils 13 anliegt. Der Dichtring 27 ist so elastisch, daß auf jeden Fall gewährleistet ist, daß in geschlossenem Zustand der Ventilsitz 8 am Kopfteil 9′ des Ventilkörpers 9 dicht abschließend anliegt.

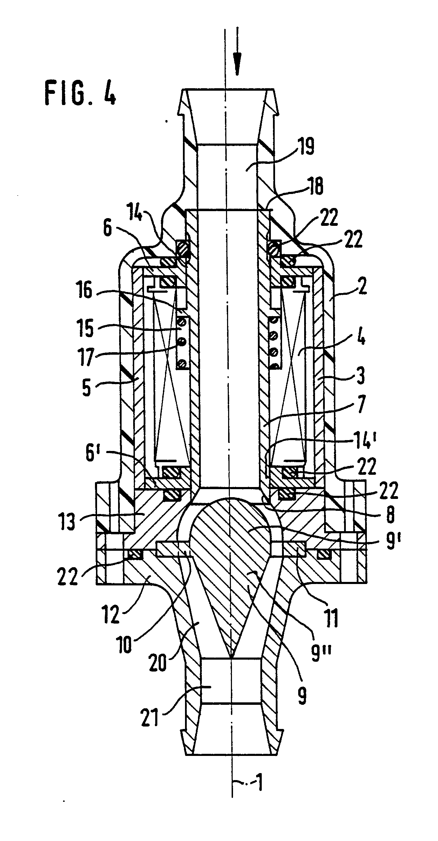

Beim in Figur 4 dargestellten Ausführungsbeispiel ist in einem symmetrisch zu einer Mittelachse 1 ausgebildeten Kunststoffgehäuse 2 in einem Magnetmantel 3 aus Eisen eine Spule 4 eines Elektromagneten eingelassen. Der Magnetmantel 3 selbst besteht aus einem zylindrischen Rohrstück 5 mit stirnseitigen Abschlußscheiben 6, 6′, die im Ausführungsbeispiel der Figur 4 von einer ebenfalls aus magnetisierbarem Material bestehenden Rohrhülse 7 durchdrungen sind.

Ein konisch ausgebildetes Ende der Rohrhülse 7 gibt einen Ventilsitz 8 ab, der mit einem stromlinienförmigen, tropfenförmigen Ventilkörper 9 zusammenwirkt. Dieser selbst besteht aus einem halbkugelförmigen Kopfteil 9′ und einem kreiskegelförmigen Endteil 9″, die über am Umfang verteilte Tragarme 10 konzentrisch in einem Haltering 11 zwischen Gehäuseteilen 12, 13 gehalten sind.

Die Rohrhülse 7 ist in Bohrungen 14, 14′ der Abschlußscheiben 6, 6′ verschiebbar geführt. Die Rohrhülse 7 weist einen in einer Ausnehmung 15 der Spule 4 angeordneten Bund 16 auf, der mit einer Feder 17 zusammenwirkt, durch die die Rohrhülse 7 gegen eine Anschlagfläche 18 des Kunststoffgehäuses 2 gedrückt wird, so daß im nicht erregten Zustand der Spule 4 ein Kühlwasserzufluß 19 über die Rohrhülse 7 über einen Kühlwasserdurchlauf 20 um den Ventilkörper 9 herum mit einem Kühlwasserablauf 21 verbunden ist. Die freien Durchflußquerschnitte sind bei geöffnetem Ventil über die gesamte Ventillänge in etwa die gleichen, so daß der Innenraum des Gehäuseteils 13 annähernd halbkugelförmig ist, während der Innenraum des Gehäuseteils 12 annähernd eine Kreiskegelabschnittfläche aufweist.

Die Abschlußscheiben 6, 6′, die Rohrhülse 7 und die Gehäuseteile 12, 13 sind durch Dichtringe 22 abgedichtet, die in entsprechenden Ausnehmungen angeordnet sind.

Bei einer Strombeaufschlagung der Spule 4 wird durch die magnetischen Kräfte die Rohrhülse 7 gegen die Wirkung der Feder 17 nach unten gegen den Ventilkörper 9 hin verschoben bis der Ventilsitz 8 am Kopfteil 9′ anliegt und den Durchfluß absperrt.

Das Gehäuse 2 mit den Gehäuseteilen 12 und 13 ist über nicht näher dargestellte Schrauben zusammengeschraubt.

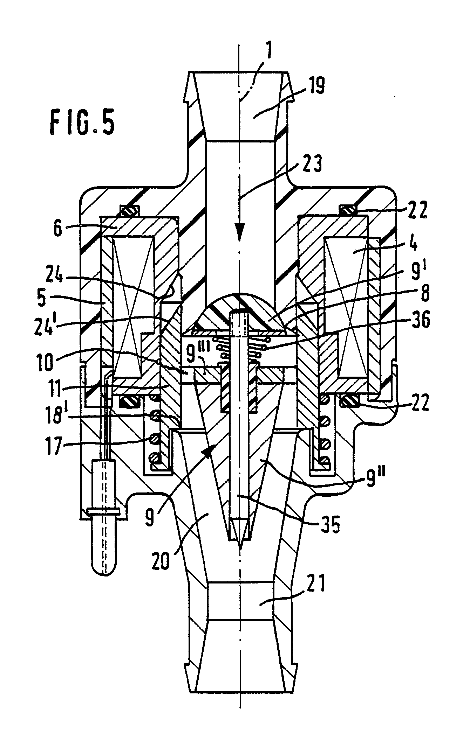

Beim in Fig. 5 dargestellten Ausführungsbeispiel besteht der axial verschiebbare Ventilkörper 9 aus einem Kopfteil 9′, einem Endteil 9″ und einer Trägerscheibe 9‴, auf deren gegenüberliegenden Seiten die Teile 9′, 9″ angeordnet sind. Der Endteil 9″ ist dabei fest mit der Trägerscheibe 9‴ verbunden, während der Kopfteil 9′ auf einem Ende einer Führungsstange 35 befestigt ist. Die Führungsstange 35 selbst ist konzentrisch im Endteil 9″ und der Trägerscheibe 9‴ verschiebbar geführt, wobei zwischen der Trägerscheibe 9‴ und dem Kopfteil 9′ eine relativ schwache Druckfeder 36 angeordnet ist, durch die der Führungsstift 35 mit dem Kopfteil 9′ gegen den Ventilsitz 8 geschoben wird. Die Druckfeder 36 ist so schwach, daß durch den Strömungsdruck des Druckmediums der Kopfteil 9′ gegen die Trägerscheibe 9‴ gedrückt und so der Durchfluß freigegeben wird, wenn der Haltering 11 mit der einstückig damit ausgebildeten Trägerscheibe 9‴ durch die Feder 17 verschoben und so das Ventil offen ist. Zur Ermöglichung des Durchflusses des Druckmediums ist die Trägerscheibe 9‴ mit entsprechenden Durchbrüchen ausgebildet, die durch die Tragarme 10 voneinander getrennt sind.

Zur Herabsetzung des Durchflußwiderstands ist das dem Kopfteil 9′ gegenüberliegende freie Ende des Führungsstifts 35 konisch ausgebildet, wobei der konische Teil in geöffnetem Zustand des Ventils in Durchflußrichtung aus dem Endteil 9″ herausragt.

## Ansprüche

1. Ventil zur Steuerung des Kühlwasserumlaufs bei Brennkraftmaschinen mit einem stromlinienförmigen Ventilkörper (9), dessen dicker Kopfteil (9′) mit einem Ventilsitz (8) zusammenwirkt und dessen an den Kopfteil (9′) angepaßter Endteil (9″) kreiskegelförmig ist, bei dem der Ventilkörper (9) und der Ventilsitz (8) durch einen Elektromagneten (Spule 4) relativ zueinander bewegbar sind und der Kühlwasserzufluß (19), der Kühlwasserdurchlauf (20) im Ventilsitz (8) und um den Ventilkörper (9) und der Kühlwasserablauf (21) etwa rotationssymmetrisch zu einer Mittelachse (1) ausgebildet sind, **dadurch gekennzeichnet**, daß der stromlinienförmige Ventilkörper (9) tropfenförmig ausgebildet ist und der Kopfteil (9′) die Form einer Halbkugel hat.

2. Ventil nach Anspruch 1, dadurch gekennzeichnet, daß der freie Durchflußquerschnitt bei ganz geöffnetem Ventil über die ganze Länge des Ventils etwa konstant ist.

3. Ventil nach Anspruch 1, dadurch gekennzeichnet, daß der stromlinienförmige, tropfenförmige Ventilkörper (9) mindestens zweiteilig ausgebildet aus dem halbkugelförmigen Kopfteil (9′) und dem kreiskegelförmigen Endteil (9″) besteht, und daß diese Teile (9,9′) gegeneinander axial verschiebbar geführt sind, und daß der Kopfteil (9′) durch eine schwache Feder gegen den Ventilsitz (8) gedrückt ist und durch den Strömungsdruck bei teilweise oder ganz geöffnetem Ventil vom Ventilsitz (8) abhebbar ist (Fig. 5).

4. Ventil nach Anspruch 1 oder 3, dadurch gekennzeichnet, daß der Ventilkörper (9) konzentrisch in einem Haltering (11) angeordnet und über am Umfang verteilte radiale Trägerarme (10) vom Haltering (11) gehalten ist und daß die radialen Haltearme (11) einen stromlinienförmigen, vorzugsweise tropfenförmigen Querschnitt aufweisen.

5. Ventil nach Anspruch 3 oder 4, dadurch gekennzeichnet, daß der Ventilkörper (9) aus drei Teilen besteht, nämlich aus dem etwa halbkugelförmigen Kopfteil (9'), dem kreiskegelförmigen Endteil (9'') und einer dazwischen liegenden Tragscheibe (9''') und daß diese Tragscheibe (9''') die Tragarme (10) aufweist.

6. Ventil nach einem der Ansprüche 1 bis 5 mit einer über den Elektromagneten verschiebbaren Rohrhülse (7), deren freies Ende den Ventilsitz (8) bildet, dadurch gekennzeichnet, daß die Rohrhülse (7) aus einem magnetisierbaren Werkstoff besteht und als verschiebbarer Ankerteil mit der Spule (4) des Elektromagneten zusammenwirkt und dabei mindestens teilweise in das Spuleninnere hineinragt (Figur 4).

7. Ventil nach einem der Ansprüche 1 bis 6, bei dem die Spule (4) des Elektromagneten mit einem Magnetmantel (3) umschlossen ist, dadurch gekennzeichnet, daß ein verschiebbarer Ankerteil in einer Bohrung (14,14') des Magnetmantels (3) verschiebbar geführt ist.

8. Ventil nach einem der Ansprüche 1 bis 7, dadurch gekennzeichnet, daß der verschiebbare Ankerteil einen Bund (16) aufweist, an dem sich eine Feder (17) abstützt und daß zwischen dem Bund 16 und einer Dichtfläche (28) des Ventilgehäuseteils (13) eine elastisch weiche Dichtung (Dichtring 27) vorgesehen ist, die in geschlossenem Zustand des Ventils das Ventilgehäuse (2) mit seiner Dichtfläche (28) gegen den Ankerteil abdichtet.

9. Ventil nach einem der Ansprüche 1 bis 8, dadurch gekennzeichnet, daß der Elektromagnet mit seinem Magnetmantel (3) von einem Kunststoffgehäuse (2) umschlossen ist.

10. Ventil nach Anspruch 4 oder 5, dadurch gekennzeichnet, daß der Haltering (11) zwischen Flanschflächen zweier Gehäuseteile (12, 13) zentriert gehalten ist und daß einer dieser Gehäuseteile (12) den trichterförmigen Kühlwasserdurchlauf (20) aufweist und der andere Gehäuseteil (13) mit Abstand an die Form des Kopfteils (9') des Ventilkörpers (9) angepaßt ist.

11. Ventil nach einem der Ansprüche 6 bis 10, dadurch gekennzeichnet, daß der andere Gehäuseteil (13) als Führung (Bohrung 14') für ein Ende der Rohrhülse (7) dient.

12. Ventil nach einem Ansprüche 9 bis 11, dadurch gekennzeichnet, daß der andere Gehäuseteil (13) scheibenförmig ausgebildet im Kunststoffgehäuse (2) zentrisch aufgenommen ist.

13. Ventil nach einem der Ansprüche 9 bis 12, dadurch gekennzeichnet, daß der Magnetmantel (3) einen Ringkonusteil (25) aufweist, der mit einer Konusfläche (24) des verschiebbaren Ankerteiles zusammenwirkt, und daß im Ringkonusteil (25) Druckausgleichkanäle (26) vorgesehen sind.

14. Ventil nach einem der Ansprüche 6 bis 13, dadurch gekennzeichnet, daß die Rohrhülse (7) aus einem nicht magnetisierbaren Rohrhülsenteil (7') und einem magnetisierbaren, in die Spule (4) des Elektromagneten hineinragenden Restteil (7'') besteht und daß die Konusfläche (24) durch ein Ende des Restteils (7') gebildet ist.

15. Ventil nach Anspruch 4 oder 5, dadurch gekennzeichnet, daß der den Ventilkörper (9) tragende Haltering (11) selbst direkt oder indirekt in Richtung der Mittelachse (1) verschiebbar geführt ist.

16. Ventil nach Anspruch 15, dadurch gekennzeichnet, daß der Haltering (11) in einem vorzugsweise glockenförmigen Leitteil (29) gehalten ist und daß dieser Leitteil (29) aus magnetisierbarem Material besteht und durch die Spule (4) verschiebbar ist.

17. Ventil nach Anspruch 16, dadurch gekennzeichnet, daß der Leitteil (29) mit einem zylindrischen Teil (31) zwischen der Spule (4) auf der Rohrhülse (7) in einer Ausnehmung (15) verschiebbar geführt ist.

18. Ventil nach Anspruch 16 oder 17, dadurch gekennzeichnet, daß der Leitteil (29) und der Magnetmantel (3) aneinander angepaßte Konusflächen (24, 24') aufweisen, die in der geschlossenen Ventilstellung mindestens nahezu aneinander anliegen.

19. Ventil nach Anspruch 16, dadurch gekennzeichnet, daß der glockenförmige Leitteil (29) an seinem durchmessergrößeren Ende eine Aufnahmeabsatz (30) aufweist, in dem der Haltering (11) gehalten ist.

20. Ventil nach einem der Ansprüche 16 bis 19, dadurch gekennzeichnet, daß der Leitteil (29) mit seiner Innenkontur mit Abstand dem Kopfteil (9') des Ventilkörpers (9) angepaßt ist.

21. Ventil nach einem der Ansprüche 1 bis 20, dadurch gekennzeichnet, daß der den Kühlwasserablauf (21) aufweisende Gehäuseteil (12) eine kreisscheibenförmige Anschlagfläche (33) für den Haltering (11) aufweist, durch die der Öffnungshub des Ventilkörpers (9) gegenüber dem Ventilschlitz (8) begrenzt ist und daß die Innenkante der Anschlagfläche (33) in der Außenfläche des Kühlwasserdurchlaufs (20) liegt.

22. Ventil nach einem der Ansprüche 16 bis 21, dadurch gekennzeichnet, daß die Rohrhülse (7) und die stirnseitige Abschlußscheibe (6) einstückig ausgebildet sind.

23. Ventil nach Anspruch 4 oder 5, dadurch gekennzeichnet, daß der Haltering (11) als verschiebbares Rohrstück (11') ausgebildet ist und als Ankerteil mit dem Magnetmantel (3) zusammenwirkt und dabei ein Ende als Konusfläche (24') ausgebildet ist, die mit einer Konusfläche (24) des Magnetmantels (3) zusammenwirkt.

24. Ventil nach einem der Ansprüche 1 bis 23, dadurch gekennzeichnet, daß ein Gehäuseteil (13) einen nach innen vorspringenden in den Magnetmantel (3) hineinragenden Rohrvorsprung (34) aufweist und daß das Ende dieses Rohrvorsprungs (34) den Ventilsitz (8) trägt und diesen mit dem Kühlwasserzufluß (19) verbindet.

25. Ventil nach Anspruch 3, dadurch gekennzeichnet, daß der Kopfteil (9') vom einen Ende eines Führungsstifts (35) getragen ist, daß dieser Führungsstift (35) konzentrisch verschiebbar im Endteil (9") und/oder der Tragscheibe (9'") verschiebbar geführt ist, daß der Führungsstift (35) den Endteil(9") durchragt und das im geöffneten Zustand des Ventils aus dem Endteil (9") herausragende Ende des Führungsstifts (35) spitz zuläuft und so die Stromlinienform des Endteils (9") fortsetzt.

FIG. 1

FIG. 2

# FIG. 3

FIG. 4

FIG.5